(19) Europäisches Patentamt
European Patent Office
Office européen des brevets

(11) EP 3 053 969 A1

(12) **EUROPEAN PATENT APPLICATION**
published in accordance with Art. 153(4) EPC

(43) Date of publication:
**10.08.2016 Bulletin 2016/32**

(21) Application number: **14849767.0**

(22) Date of filing: **30.09.2014**

(51) Int Cl.:
***C09D 5/20*** *(2006.01)* ***C09J 7/02*** *(2006.01)*

(86) International application number:
**PCT/KR2014/009170**

(87) International publication number:
**WO 2015/047014 (02.04.2015 Gazette 2015/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2013 KR 20130116294**
**29.09.2014 KR 20140130362**

(71) Applicant: **Kolon Industries, Inc.**
**Gwachoen-si, Gyeonggi-do 427-709 (KR)**

(72) Inventor: **IM, Mi-So**
**Yongin-si**
**Gyeonggi-do 427-709 (KR)**

(74) Representative: **Merkle, Gebhard**
**Ter Meer Steinmeister & Partner**
**Patentanwälte mbB**
**Nymphenburger Straße 4**
**80335 München (DE)**

(54) **RELEASE FILM AND MANUFACTURING METHOD THEREFOR**

(57) Provided is a release film, and more specifically, an in-line coating release film used for electronic materials for a multilayer ceramic capacitor (MLCC), a polarizing plate protection, an optically clear adhesive (OCA), etc.

FIG. 1

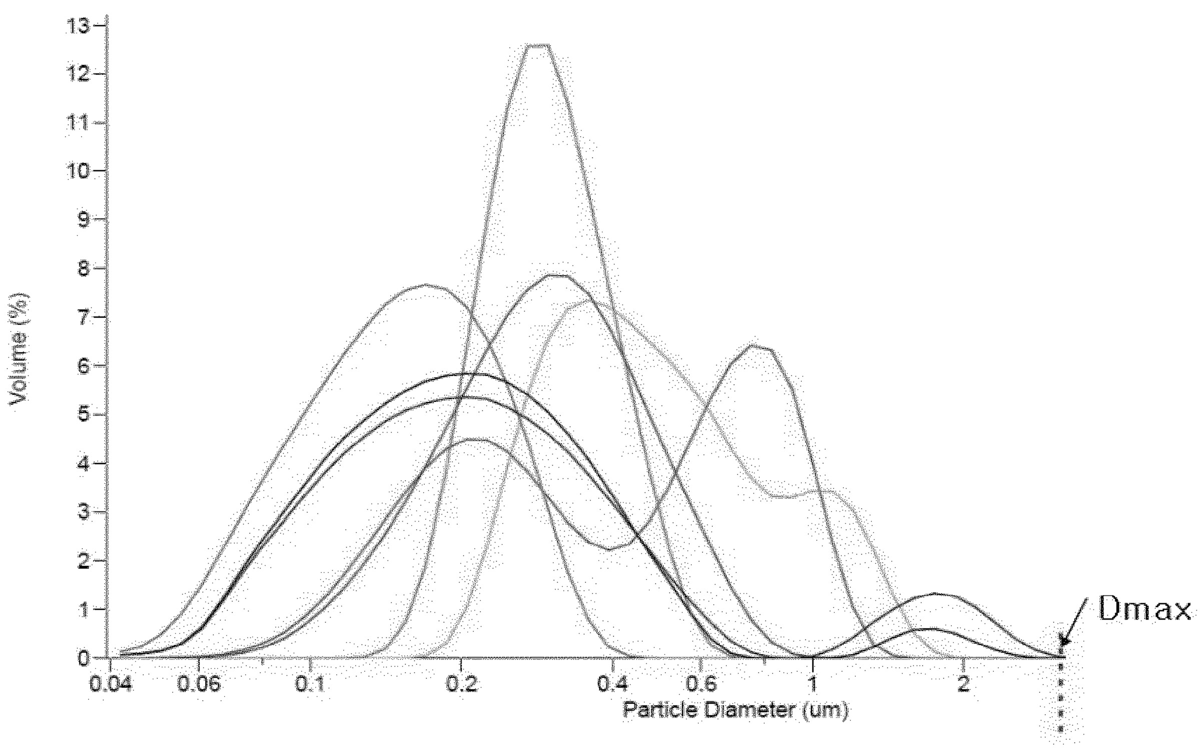


EP 3 053 969 A1

## Description

[Technical Field]

The present invention relates to a release film. More specifically, the present invention relates to an in-line coating release film used for electronic materials for a multilayer ceramic capacitor (MLCC), a polarizing plate protection, an optically clear adhesive (OCA), etc.

[Background Art]

A polyester film has excellent physical property stability within a wide temperature range from a low temperature to a high temperature and excellent chemical resistance as compared to other polymer resins. In addition, the polyester film has excellent mechanical strength, surface properties, and uniformity in thickness which is applicable for various usages or processing conditions. Accordingly, the polyester film is applied to green sheets for a condenser, a photographic film, a label, a pressure-sensitive tape, a decorative laminate, a transfer tape, a polarizing plate, a ceramic release, etc., and a demand for the polyester film has been increased in accordance with the recent trend of high speed and automation.
Among various usages, a film for an electronic material requires a higher level of physical properties and cost reduction due to growing competition together with the recent recession of an optical market.
As a way to respond to such a request, there is an attempt to convert an off-line coating release film to an in-line coating release film to reduce cost.
In addition, in accordance with the recent trend of miniaturization of electronic devices, electronic components such as a condenser, an inductor, etc., have also been miniaturized, and a ceramic green sheet itself has also been thinned. Accordingly, in order to achieve high quality miniaturization while implementing the same capacity even though the electronic components are miniaturized, thinning of the ceramic green sheet, and securing uniformity in thickness are urgently required. Accordingly, a release film having high degree of smoothness to be capable of minimizing a thickness deviation of the green sheet has been required, but the release film meeting this purpose is not sufficient.
A polyester film for molding a ceramic condenser green sheet is used as a release film by coating other polymer resins onto a base film. At the time of manufacturing the release film, drivability, close adhesion property, uniform surface shape, transparency, etc., are required. To this end, modification of the base film itself in addition to a method for improving a silicone coating crude liquid also has emerged as important requirements. In particular, as the base film is used for molding a ceramic condenser green sheet after silicone coating, a uniform surface shape of the base film becomes a critical requirement of the base film.
Regarding this, Korean Patent Laid-Open Publication No. 2003-0055118 (July 2, 2003) discloses a polyester film for a release film in which a maximum protrusion height (Rmax) on one surface (surface A) of the polyester film is 500nm or less and a thickness variation is 5% or less, the thickness variation being defined by the following Equation using the maximum value, the minimum value, and an average value of a film thickness in a longitudinal direction and in a transverse direction of the polyester film, in order to provide a polyester film in which at the time of applying ceramic slurry onto a release film, formation of pinholes in a ceramic slurry layer is largely inhibited, and the thickness variation of the ceramic layer when the ceramic layer is applied onto the release film is reduced, thereby providing excellent release performance and being useful as a base of the release film.
Further, a release film including a release layer on one surface of the polyester film is also disclosed.
In addition, Korean Patent Laid-Open Publication No. 1999-0088139 (Dec. 27, 1999) discloses a release film capable of preventing blocking, etc., even though a release film in which a release layer has a smooth surface is wound in a roll form, and being replaceable for molding a thin film green sheet, which is characterized in that a central line average roughness (Ra) of the release layer surface is 30 nm or less, a distribution curve showing relationship of a protrusion height (X) and the number of protrusions (Y) of the release layer surface satisfies the following Equation (1) within a range at which the protrusion height is 0.05 $\mu$m to 0.3 $\mu$m, and the number of protrusions having 0.4 $\mu$m or more of the protrusion height of the release layer surface is 35 /mm$^2$ or less.
In these patent documents, surface roughness, thickness uniformity of the release layer coated surface of the polyester film used as the base of the release film, or the number of coarse particles, etc., are considered as important factors for securing surface smoothness of the release film.

[Disclosure]

[Technical Problem]

An object of the present invention is to provide a polyester film capable of having a smooth surface and being used as a base film that is appropriate for a release film for an electronic material, and a release film using the same.

In addition, another object of the present invention is to provide a polyester film having excellent maximum peak height surface roughness ($R_p$) of 0.27 μm or less, preferably, 0.1 μm to 0.27 μm, on one surface (Surface A) of the film, to decrease the size of open defects, and having excellent processability.

Further, another object of the present invention is to provide a release film including the polyester film as a base film, and including a release coating layer formed on one surface or both surfaces of the base film to have excellent adhesion force with the polyester film, a small change according to time and a small deviation in the release force, and a high remaining adhesion rate.

In addition, another object of the present invention is to provide a release film in which the polyester base film has a thickness of 10 μm to 50 μm to be a thin film. Accordingly, another object of the present invention is to provide a release coating composition capable of being coated by an in-line coating method so that a release coating layer also has a thickness of 0.07 μm to 0.3 μm to be a thin film, and a method for manufacturing a release film using the same.

Further, another object of the present invention is to provide a release film capable of solving a problem in which the release coating layer is non-uniformly coated that occurs when coating by an in-line coating method, having a reduced surface roughness of the polyester base film to form a uniform coating layer, securing a winding property, and preventing Fish-Eye.

[Technical Solution]

In one general aspect, there is provided a release film including: a polyester base film including particles satisfying Equations 1 to 3 below, and
a release coating layer formed on one surface or both surfaces of the base film and having a release force variation satisfying Equation 4 below and a release force deviation satisfying Equation 5 below:

$$0.15 \leq P_a \leq 0.6 \quad \text{(Equation 1)}$$

$$0.6 \leq D_{max} \leq 2.5 \quad \text{(Equation 2)}$$

$$0.1 \leq P_a / D_{max} \leq 0.4 \quad \text{(Equation 3)}$$

(in Equations 1 to 3, $P_a$ is an average particle diameter (μm) of the particle, and $D_{max}$ is the maximum particle diameter (μm) of th particle),

$$|R_f - R_i| \leq 25 \quad \text{(Equation 4)}$$

(in Equation 4, $R_i$ is a release force measured after leaving the release film at 55°C for 24 hours, and $R_f$ is a release force measured after leaving the release film at 55°C for 240 hours), and

$$|R_{f-max} - R_{f-min}| \leq 2 \quad \text{(Equation 5)}$$

(in Equation 5, $R_{f-max}$ is the maximum value of five release force values each measured after leaving the release film at 55°C for 240 hours, and $R_{f-min}$ is the minimum value of five release force values each measured after leaving the release film at 55°C for 240 hours).

In another general aspect, there is provided a method for manufacturing a release film including:

a) melt-extruding a polyester resin including particles satisfying Equations 1 to 3 below to be manufactured into a sheet:

$$0.15 \leq P_a \leq 0.6 \quad \text{(Equation 1)}$$

$$0.6 \leq D_{max} \leq 2.5 \quad \text{(Equation 2)}$$

$$0.1 \leq Pa / D_{max} \leq 0.4 \quad \text{(Equation 3)}$$

(in Equations 1 to 3, $P_a$ is an average particle diameter (μm) of the particle, and $D_{max}$ is the maximum particle diameter (μm) of the particle),

b) stretching the sheet three (3) to five (5) times at 80°C to 150°C in a longitudinal direction;

c) applying a release coating composition including a compound represented by Chemical Formula 1 below and a compound represented by Chemical Formula 2 below, on one surface or both surfaces of the uniaxially stretched polyester base film in the longitudinal direction, by an in-line coating method;

d) drying and pre-heating the film onto which the release coating composition is applied at 130°C to 150°C, and stretching the film three (3) to four (4) times in a transverse direction, to manufacture a release film in which a release coating layer is formed; and

e) performing a heat treatment,

[Chemical Formula 1]

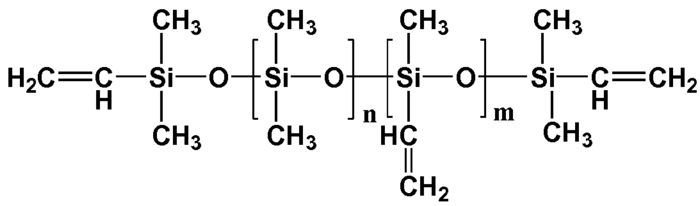

(in Chemical Formula 1, n is 20 to 3000, m is1 to 500, and n+m is 21 to 3000), and

[Chemical Formula 2]

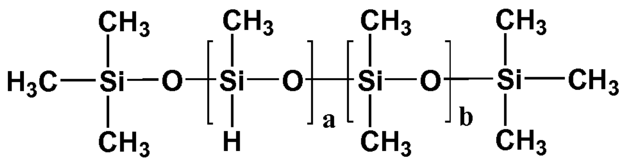

(in Chemical Formula 2, a is 1 to 150, b is 3 to 300, and a+b is 5 to 300).

[Advantageous Effects]

The release film according to the present invention may satisfy surface properties that are basically required for a highly smooth release film for a multilayer ceramic condenser (MLCC) and may have highly smooth surface properties required at the time of being applied to electronic materials for a polarizing plate protection, an optically clear adhesive (OCA), etc., by effectively controlling the average particle diameter of the particle and the maximum particle diameter ($D_{max}$) with respect to particle size distribution. In addition, appropriate surface roughness may be controlled to secure winding property and workability and fish-eye may be reduced to effectively control occurrence of pinholes.

Further, the release film according to the present invention has a smooth release layer surface to prevent blocking even though the release film is wound in a roll form, and to be appropriately used for the electronic materials.

In addition, the release film according to the present invention may be coated by an in-line coating method, such that loss caused by post-processing may be reduced, the number of processes may be decreased, thereby reducing costs. Further, the release film according to the present invention may include a uniform coating layer to have a small change according to time and a small deviation of release force, and an excellent remaining adhesion rate of 90% or more, thereby implementing an excellent releasing property.

With the method for manufacturing the release film according to the present invention, the surface properties of the base film may be controlled to maximize physical properties, and the in-line coating method may be introduced to reduce the costs, thereby providing economic feasibility and maximizing productivity.

[Description of Drawings]

FIG. 1 illustrates graphs showing positions of the maximum particle diameters in the present invention.

[Best Mode]

Hereinafter, each configuration of the present invention will be described in detail.
In the present invention, it is possible to add particles at the time of synthesizing a polyester resin, or it is possible to synthesize the polyester resin, and then, mix the particles with the polyester resin in a melt extrusion step.
However, in order to have excellent particle dispersibility and to prevent agglomeration of the particles, it is preferable to mix the particles and glycol and introduce the particles in a slurry state at the time of polymerizing the polyester resin.
In an exemplary embodiment, there is provided a polyester base film including particles satisfying Equations 1 to 3 below:

$$0.15 \leq P_a \leq 0.6 \quad \text{(Equation 1)}$$

$$0.6 \leq D_{max} \leq 2.5 \quad \text{(Equation 2)}$$

$$0.1 \leq Pa / D_{max} \leq 0.4 \quad \text{(Equation 3)}$$

(in Equations 1 to 3, $P_a$ is an average particle diameter (μm) of the particle, and $D_{max}$ is the maximum particle diameter (μm) of the particle).
In an exemplary embodiment of the present invention, when the maximum particle diameter of the particle is less than 0.6 μm, surface smoothness of the polyester base film is improved, but scratches caused by friction in a manufacturing process of the film or the winding property is poor, such that protrusion and foam void may occur. When the maximum particle diameter of the particle is more than 2.5 μm, since drivability and winding property are excellent, but coarse particles are present, when the polyester base film is manufactured, a probability that open defects occur may be increased, and when the film is wound in a roll form and stored for a long period of time, an orange peel phenomenon, in which a surface of the film is rough similar to an orange peel, may occur. Accordingly, non-uniform coating is caused in a post-process, and defects are caused by transcription to a coated adhesive, etc.
The maximum particle diameter (μm) of the particle is measured by a device for measuring particle size distribution. Here, the maximum particle diameter means a size of the particles that remain shortly before a volume of large particles is 0% on a particle size distribution graph. FIG. 1 illustrates graphs showing particle size distribution of inorganic particles that are mainly used in the present invention. In FIG. 1, $D_{max}$ means the maximum particle diameter (μm).
In an exemplary embodiment of the present invention, the particles preferably have an amount of 0.03 wt% to 0.25 wt% based on a total weight of the film. When the particles have an amount of less than 0.03 wt%, it is difficult to secure drivability and releasing property due to the small amount of the particles, and a possibility that winding defects occur is increased. In addition, when the particles have an amount of more than 0.25 wt%, a maximum peak height surface roughness ($R_p$) is increased, and accordingly, a possibility that pinholes or fish-eye due to particle agglomeration occurs is increased.
In an exemplary embodiment of the present invention, as shown in Equation 3 showing the correlation between the average particle diameter and the maximum particle diameter, it is preferable to use particles having a small difference between the average particle diameter and the maximum particle diameter. More preferably, as shown in graphs showing the particle size distribution, when the graph has a narrow shape with a large amount of uniform particles, the maximum peak height surface roughness ($R_p$) may be decreased to inhibit the occurrence of pinholes. Preferably, as shown in Equation 3, when $P_a$ / $D_{max}$ is 0.1 to 0.4, and more preferably, 0.2 to 0.38, smoothness is the most excellent.
In an exemplary embodiment of the present invention, it is preferable to add the particles in a slurry state in which the particles are dispersed in glycol at the time of synthesizing the polyester resin in view of excellent dispersibility and prevention of reagglomeration of the particles, but the addition of the particles is not limited thereto.
That is, polyester may be obtained by polycondensing an acid component including dicarboxylic acid as a main component and a glycol component including alkylglycol as a main component, and the particles may be added in the polycondensation step or a solid-state polymerization step, wherein at the time of adding the particles, it is preferable to add the particles in a slurry state in which the particles are dispersed in the glycol components.

In an exemplary embodiment of the present invention, the polyester resin forming the polyester base film may be obtained by polycondensing the acid component including dicarboxylic acid as the main component and the glycol component including alkylglycol as the main component. As the main component of dicarboxylic acid, terephthalic acid or alkylester or phenylester thereof, etc., are mainly used, but a portion thereof may be substituted with, for example, bifunctional carboxylic acid such as isophthalic acid, oxyethoxy benzoic acid, adipic acid, sebacic acid, 5-sodiumsulfoisophthalic acid, etc., or ester forming derivatives thereof. Further, as the glycol component, ethyleneglycol is mainly used, but a portion thereof may be substituted with, for example, propylene glycol, trimethylene glycol, 1,4-cyclohexanediol, 1,4-cyclohexanedimethanol, 1,4-bisoxyethoxybenzene, bisphenol, polyoxyethyleneglycol. Moreover, the glycol component may be used in combination with a monofunctional compound or a trifunctional compound when the monofunctional compound or the trifunctional compound is in a small amount.

In an exemplary embodiment of the present invention, the particles are not particularly limited as long as the average particle size, an added amount, and a size distribution are included within the scope of the present invention. Preferably, the average particle size is 0.15 μm to 0.6 μm, an amount of the added particles is 0.03 wt% to 0.25 wt%, the maximum particle diameter ($D_{max}$) in the particle size distribution is 0.6 μm to 2.5 μm, and accordingly, coarse particles are preferably removed.

In an exemplary embodiment of the present invention, the particles are not limited in view of a kind. The particle may be an inorganic particle, an organic particle, or a mixture of inorganic particle and organic particle, and may be used alone or mixed with two or more thereof. That is, one kind of inorganic particle or two or more kinds of inorganic particles may be used, one kind of organic particle or two or more kinds of organic particles may be used, or one kind or two or more kinds of inorganic particles may be mixed with one kind or two or more kinds of organic particles.

Specifically, calcium carbonate, titanium oxide, silica, kaolin, barium sulfate, etc., may be used as the inorganic particles. Silicone resins, crosslinked divinylbenzene polymethacrylate, crosslinked polymethacrylate, cross-linked polystyrene resins, benzoguanamine-formaldehyde resins, benzoguanamine-melamine-formaldehyde resins, melamine-formaldehyde resins, etc., may be used as the organic particles.

In an exemplary embodiment of the present invention, the polyester base film may have a haze of 1.5% to 10%. When the haze of the film is less than 1.5%, transparency is excellent, but the particle amount is not sufficient, such that winding defects in the roll form may occur. When the haze of the film is more than 10%, transparency is low, such that a test for defective parts such as pinholes, open defects, etc., which is generally performed in the green sheet and the film for electronic materials may be disturbed.

In an exemplary embodiment of the present invention, the polyester base film may have a maximum peak height surface roughness ($R_p$) of 0.1 μm to 0.27 μm.

Here, the maximum peak height surface roughness ($R_p$) is measured under conditions of a measurement speed of 0.05mn/sec, a stylus radius of 2 μm, a load of 0.7mN, a cut-off value of 0.08 mm by a two-dimensional surface roughness measurement device (Kosaka Lab. Surfcorder SE-3300) according to JIS B0601. In order to calculate an average value, a standard length of 1.5 mm from the curve of a film cross-section in a central line direction was selected, and the surface roughness thereof was measured a total of five times, and the average value was calculated. Here, the highest profile peak height from the central line within a length of the samples is determined as the maximum peak height surface roughness ($R_p$).

When the maximum peak height surface roughness ($R_p$) is less than 0.1 μm, a haze of the film is decreased, but the number of surface protrusions is small, such that a coefficient of friction is increased, and releasing property is decreased. When the maximum peak height surface roughness ($R_p$) is more than 0.27 μm, the number of surface protrusions is increased due to coarse particles, such that a probability that pinholes occur at the time of molding the green sheet may be increased. Accordingly, since the green sheet layer has a non-uniform thickness, capacitance defect occurs, and at the time of thinning the green sheet, problems such as breakage due to peel defect, etc., may occur at the time of molding the green sheet. Therefore, the polyester base film according to the present invention has the maximum peak height surface roughness ($R_p$) of 0.27 μm or less, and preferably, of 0.1 μm to 0.27 μm.

In an exemplary embodiment of the present invention, the polyester base film may have a coefficient of static friction and a coefficient of dynamic friction of 0.2 to 0.5. When the coefficient of static friction and the coefficient of dynamic friction are more than 0.5, the winding property is poor, such that protrusion, scratch, etc., may occur, and accordingly, it is impossible to achieve a stable operation. When the coefficient of static friction and the coefficient of dynamic friction are less than 0.2, a slip property of the film is increased, such that a probability that foam vacancy occurs may be increased.

The present inventors made an effort to overcome problems that when the polyester base film has improved smoothness by decreasing surface roughness, the winding property is poor, and fish-eye may occur or the release coating layer may have a non-uniform surface at the time of coating the release composition, and as a result, found that these problems could be solved by forming the release coating layer according to the present invention by satisfying the following Equations 4 and 5, and completed the present invention:

$$|R_f - R_i| \leq 25 \quad \text{(Equation 4)}$$

(in Equation 4, $R_i$ is a release force measured after leaving the release film at 55°C for 24 hours, and $R_f$ is a release force measured after leaving the release film at 55°C for 240 hours), and

$$|R_{f\text{-}max} - R_{f\text{-}min}| \leq 2 \quad \text{(Equation 5)}$$

(in Equation 5, $R_{f\text{-}max}$ is the maximum value of five release force values each measured after leaving the release film at 55°C for 240 hours, and $R_{f\text{-}min}$ is the minimum value of five release force values each measured after leaving the release film at 55°C for 240 hours).

Equation 4 above represents change according to time of release force. As the change according to time of release force becomes decreased, a finally manufactured product is capable of being stored for a long period of time, such that it is easy to be managed, and at the time of peeling the release film, uniform peeling force is preferably shown. When the change according to time of release force is less than 25, it is preferable that peel signs do not remain at the time of peeling a film having a width of 1000 mm or more by a machine. On the contrary, when the change according to time of release force is more than 25, high release force is shown at the time of peeling the film having a width of 1000 mm, such that the peel signs of the release film may remain on the surface of the green sheet or the surface of the sheet for electronic materials.

Equation 5 above represents release force deviation. When the deviation of release force values measured after leaving the release film at 55°C for 240 hours is less than 2, it does not sense the release force deviation, and noise that may occur at the time of peeling does not occur. Meanwhile, when the deviation of release force values measured after leaving the release film at 55°C for 240 hours is more than 2, it senses the release force deviation, and noise (clacker when peeling the film) may occur at the time of peeling.

The release coating layer of the present invention for expressing the physical properties may include a compound represented by Chemical Formula 1 and a compound represented by Chemical Formula 2:

[Chemical Formula 1]

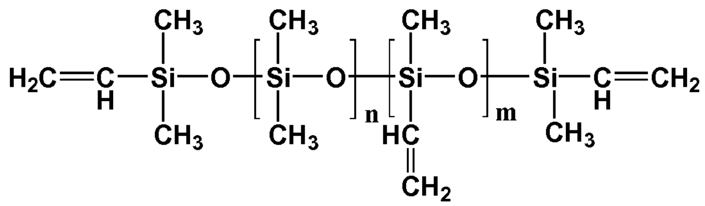

(in Chemical Formula 1, n is 20 to 3000, m is 1 to 500, and n+m is 21 to 3000), and

[Chemical Formula 2]

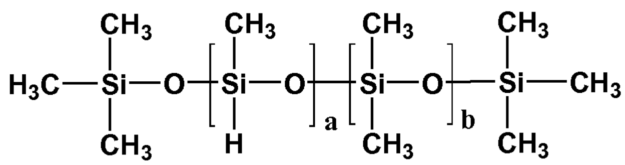

(in Chemical Formula 2, a is 1 to 150, b is 3 to 300, and a+b is 5 to 300).

The compound of Chemical Formula 1 is a main material of the release coating layer, and has a prepolymer state, and the compound of Chemical Formula 2 is a curing agent, and reacted with the compound of Chemical Formula 1 to form a polydimethylsilicone resin (PDMS). A vinyl group of Chemical Formula 1 is reacted with a silane group of Chemical Formula 2, and the silane group (Si-H) and Si-$CH_3$ are randomly crossed in Chemical Formula 2, such that steric hindrance of the curing agent of Chemical Formula 2 is lower than that of a curing agent in which only Si-H bonds are continuous, whereby a reaction speed is rapid, and physical properties of the polyester base film of the present

invention are not inhibited.

The compound of Chemical Formula 1 is commercially available as D490, D400E, and D430 (Wacker Company), etc.

The compound of Chemical Formula 2 is commercially available as V-72 and V-15 (Wacker Company), etc.

More specifically, the release coating layer may be formed by coating a release coating composition including the compound represented by Chemical Formula 1, the compound represented by Chemical Formula 2, a platinum-based catalyst, and a silicone-based wetting agent, and having a solid content of 10 to 30 wt% at a coating thickness of 0.07 to 0.3 μm.

When the solid content of release coating composition is less than 10 wt%, a surface of the polyester film is not sufficiently covered, such that the release force deviation may occur. When the solid content of release coating composition is more than 30 wt%, sufficient heat is not supplied at the time of in-line coating, such that a reaction conversion rate of the release coating layer may be decreased. In addition, when the coated thickness of the release coating composition is less than 0.07 μm, high peaks of the polyester film are not covered by the coating layer, such that release force is highly shown. When the coated thickness of the release coating composition is more than 0.3 μm, coating stain may occur and the reaction conversion rate of the release coating layer may be decreased.

The platinum-based catalyst is commercially available as EM440 (Wacker Company), etc.

The silicone-based wetting agent is commercially available as Q2-5212 (Dow Corning Company), etc.

More specifically, the release coating composition may include the compound represented by Chemical Formula 1 having a solid content of 5 wt% to 25 wt%, and more specifically, 8 wt% to 16 wt%. When the solid content of the compound represented by Chemical Formula 1 is less than 5 wt%, the film surface may not be sufficiently covered. When the solid content of the compound represented by Chemical Formula 1 is more than 25 wt%, the reaction conversion rate may be low, such that the remaining adhesion rate may be increased. The compound represented by Chemical Formula 2 may have a solid content of 0.5 wt% to 5 wt%, and more specifically, 0.8 wt% to 2 wt%. When the solid content of the compound represented by Chemical Formula 2 is less than 0.5 wt%, the release coating layer may not be sufficiently cured. When the solid content of the compound represented by Chemical Formula 2 is more than 5 wt%, unreacted silane groups remain, such that the change according to time of release force may be increased. The platinum-based catalyst may have a solid content of 0.001 wt% to 3 wt%, and more specifically, 0.005 wt% to 0.1 wt%. When the solid content of the platinum-based catalyst is less than 0.001 wt%, an effect obtained from the platinum-based catalyst may not be sufficient. When the solid content of the platinum-based catalyst is more than 3 wt%, the platinum-based catalyst may excessively remain, such that non-uniformity of release force may occur. The silicone-based wetting agent may have a solid content of 0.1 wt% to 3 wt%, and more specifically, 0.5 wt% to 2 wt%. When the solid content of the silicone-based wetting agent is less than 0.1 wt%, an effect obtained from the silicone-based wetting agent may not be sufficient. When the solid content of the silicone-based wetting agent is more than 3 wt%, a coating stain may occur.

The release film may have the remaining adhesion rate of 90% or more, calculated according to Equation 6 below after an adhesive tape attached with the release film is maintained at 70°C for 24 hours, the adhesive tape is removed, and the release film is laminated with a Teflon sheet:

**[95]** (Equation 6) Remaining adhesion rate = adhesion force of adhesive tape after aging at 70℃ for 24 hours / adhesion force of initiative adhesive tape × 100.

When the remaining adhesion rate is 90% or more, it may be determined that the release film has a small amount of unreacted materials, such that an amount in which the unreacted materials of the release film are transcribed to a final product after post-processing is also small, which provides preferable results.

A method for manufacturing the polyester film according to an exemplary embodiment of the present invention in order to obtain the above-described polyester film includes:

melt-extruding a polyester resin including particles satisfying Equations 1 to 3 below to be manufactured into a sheet:

$$0.15 \le P_a \le 0.6 \quad \text{(Equation 1)}$$

$$0.6 \le D_{max} \le 2.5 \quad \text{(Equation 2)}$$

$$0.1 \le P_a / D_{max} \le 0.4 \quad \text{(Equation 3)}$$

(in Equations 1 to 3, $P_a$ is an average particle diameter (μm) of the particle, and $D_{max}$ is the maximum particle diameter (μm) of the particle),

b) stretching the sheet three (3) to five (5) times at 80°C to 150°C in a longitudinal direction;

c) applying a release coating composition including a compound represented by Chemical Formula 1 below and a compound represented by Chemical Formula 2 below, on one surface or both surfaces of the uniaxially stretched polyester base film in the longitudinal direction, by an in-line coating method;

d) drying and pre-heating the film onto which the release coating composition is applied at 130°C to 150°C, and stretching the film three (3) to four (4) times in a transverse direction, to manufacture a release film in which a release coating layer is formed; and

e) performing a heat treatment,

[Chemical Formula 1]

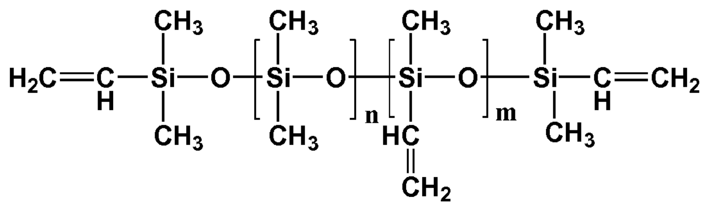

(in Chemical Formula 1, n is 20 to 3000, m is1 to 500, and n+m is 21 to 3000), and

[Chemical Formula 2]

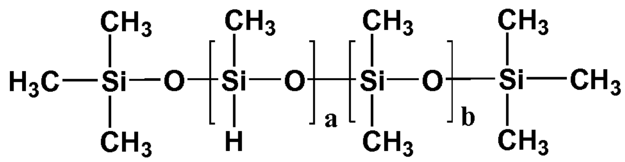

(in Chemical Formula 2, a is 1 to 150, b is 3 to 300, and a+b is 5 to 300).

In the method of the present invention, in step c), the release coating composition may be applied by using a gravure roll. When the gravure coating roll is used, the release coating composition may be applied at a uniform thickness.

When step d) is performed at a temperature of less than 130°C, the film may be cracked, and when step d) is performed at a temperature of more than 150°C, uniformity of the film thickness may be decreased. In addition, when a stretching rate is less than three times, uniformity of the film thickness may be decreased. When the stretching rate is more than four times, the film may be cracked.

In step e), the heat treatment may be performed at 230°C to 250°C. When the heat treatment is performed at a temperature of less than 150°C, the release coating layer is not sufficiently reacted, such that a phenomenon that the film is pushed may occur. When the heat treatment is performed at a temperature of more than 250°C, heat wrinkles and orange peel phenomenon of the film may occur.

The polyester base film of the release film may have a thickness of 10 μm to 50 μm, and the release coating layer of the release film may have a thickness of 0.07 μm to 0.3 μm.

Hereinafter, Examples of the present invention will be provided for a detailed description of the present invention. However, the present invention is not limited to the following Examples.

1) Measurement of average particle diameter and maximum particle diameter ($D_{max}$) of the particle:

The average particle diameter and the maximum particle diameter ($D_{max}$) were measured by using a device for measuring particle size distribution (Beckman Coulter LS13 320: laser diffraction particle size analyzer). The maximum particle diameter ($D_{max}$) means a size of the particles that remain shortly before a volume of large particles is 0% on a particle size distribution graph. The particle size distribution graph was shown in FIG. 1.

2) Measurement of haze:

The haze was measured according to ASTM D-1003. Seven (7) samples were randomly extracted from 2 side regions and 1 central region of a polyester film, and cut into a size of 5 cm × 5 cm. Then, the cut samples were put into a haze meter (Nippon Denshoku NDH 300A), and transmitted by light having a wavelength of 555nm. Haze of each of the samples was calculated by the following Equation, and an average value thereof except for the maximum/the minimum value was calculated.

$$\text{Haze (\%)} = (\text{Total scattering light} / \text{Total transmission light}) \times 100$$

3) Measurement of surface roughness ($R_a$) and maximum peak height surface roughness ($R_p$):

The surface roughness was measured under conditions of a measurement speed of 0.05 mm/sec, a stylus radius of 2 μm, a load of 0.7 mN, a cut-off value of 0.08 mm by a two-dimensional surface roughness measurement device (Kosaka Lab. Surfcorder SE-3300) according to JIS B0601. In order to calculate an average value, a standard length of 1.5 mm from the curve of film cross-section in a central line direction was selected, and the surface roughness thereof were measured a total of five times, and the average value was calculated. When the surface roughness curve is expressed as y=f(x), wherein the x-axis is the central line and the y-axis is a perpendicular direction, the surface roughness is provided as follows:

(L: Measurement length)

Here, the highest profile peak height from the central line within a length of the samples is determined as the maximum peak height surface roughness ($R_p$).

4) Measurement of coating uniformity

When an area of a part in which the release layer is not formed based on an area of the base film in the polyester release film is 1% or less, coating uniformity is determined as good. When a part in which the release layer is not formed based on the area of the base film in the polyester release film is 1% or more, coating uniformity is determined as defective.

5) Measurement of coating thickness

The coating thickness is calculated by measuring a silicone amount of the release layer by the XRF equipment (Oxford Inc. LX3500), and converting the measured value into a coating thickness.

6) Measurement of release force: FINAT 10 (Standard Tape : TESA 7475)

A tape positioned on the release coating layer rubbed up and down using a 2Kg rubber roll twice, and cut into a size of 50 mm × 15 cm, thereby preparing a sample. The prepared sample is left at 55°C for 24 hours under a load of 70g/$cm^2$, and an 180 degree peel test was performed by a peel tester (Chem Instrument, AR-1000).
The measurement was performed at a peel speed of 300mm/min a total of five times, and an average value was calculated.

7) Measurement of change according to time of release force

A tape positioned on the release coating layer rubbed up and down using a 2Kg rubber roll twice, and cut into a size of 50 mm × 15 cm, thereby preparing samples. The prepared sample is left at 55°C for 240 hours under a load of 70g/$cm^2$, and an 180 degree peel test was performed by a peel tester (Chem Instrument, AR-1000).
The measurement was performed at a peel speed of 300mm/min a total of five times, and an average value was calculated.
Change according to time of average release force : The change according to time of average release force was calculated by continuously performing measurement at a range of 10 cm.
Change according to time of release force deviation : The change according to time of release force deviation means a difference between the maximum value and the minimum value, and was calculated by continuously performing

measurement at a range of 10 cm.

8) Remaining adhesion rate

The remaining adhesion rate was measured to confirm transcription to an adhesive after laminating the silicone release film with the adhesive. The remaining adhesion rate was measured as follows: First, the release film was laminated with the adhesive and left at 55°C for 24 hours under a load of $70g/cm^2$, and transcription was induced under severe conditions. Then, the measured adhesion force was compared and evaluated with the adhesion force of the adhesive laminated with Teflon according to the same method as above.
In general, 90% or more of the remaining adhesion rate is required.
Hereinafter, particles and coating composition liquids used in Examples and Comparative Examples were as follows:

Particle A: Calcium carbonate particles having an average particle diameter of 0.59 μm and the maximum particle diameter (μm) of 2.2 μm;
Particle B: Titanium dioxide particles having an average particle diameter of 0.36 μm and the maximum particle diameter (μm) of 1.52 μm;
Particle C: Calcium carbonate particles having an average particle diameter of 0.51 μm and the maximum particle diameter (μm) of 2.42 μm;
Particle D: Silica particles having an average particle diameter of 0.19 μm and the maximum particle diameter (μm) of 0.6 μm;
Particle E: Silica particles having an average particle diameter of 0.34 μm and the maximum particle diameter (μm) of 3.5 μm; and
Particle F: Silica particles having an average particle diameter of 0.13 μm and the maximum particle diameter (μm) of 1.5 μm.

Coating liquid 1: Composition including polydimethylsiloxane (Wacker Company, D490) represented by Chemical Formula 1 and having a solid content of 49.99 wt%, and a platinum catalyst (Wacker Company, EM440) having a solid content of 0.01 wt%, wherein a total solid content is 50 wt%.
Coating liquid 2: Composition including a hydrogen silane-based compound (Wacker Company, V-15) represented by Chemical Formula 2 and having a solid content of 50 wt%.
Coating liquid 3: Composition including a silicone-based wetting agent (Dow Corning Company, Q2-5212) having a solid content of 80 wt%.

[Example 1]

(Preparation of coating liquid A)

20 wt% of the coating liquid 1, 1.1 wt% of the coating liquid 2, and 1 wt% of the coating liquid 3 were mixed, and water was added to the mixture to have a total solid content of 11.55 wt%, thereby preparing a coating liquid A.

(Manufacture of release film)

1000 g of dimethyl terephthalate, 576g of ethylene glycol, 300 ppm of magnesium acetate and 400 ppm of trimethyl phosphate based on an amount of the polyester resin were put into a reactor, followed by a transesterification reaction while discharging methanol. After the transesterification reaction was terminated, the calcium carbonate particles A as shown in Table 1 below was added as a form of ethylene glycol slurry (a mixture of 50 wt% of calcium carbonate and 50 wt% of ethylene glycol) having an amount of 1.0 part by weight based on 100 parts by weight of the polyester resin. Then, a polycondensation reaction was performed at 285°C at 0.3 torr vacuum to obtain a polyester chip having an intrinsic viscosity of 0.61.
The polyester chip was melt-extruded at 280 °C, and rapidly cooled at 24 °C by using a large roll, to thereby obtain a polyester sheet. The obtained polyester sheet was stretched to 3.5 times in a longitudinal direction at 110 °C, and cooled to obtain a film. Then, the coating liquid (A) was applied onto the film by a gravure coater.
The film was dried and pre-heated at 150°C and stretched by 3.5 times in a transverse direction to manufacture a biaxially stretched film. The obtained biaxially stretched film was heat-treated at 240°C to obtain a polyester film having a thickness of 25 μm.
Physical properties of the obtained polyester film were measured and shown in Table 1 below.

[Examples 2 to 6]

A polyester film was manufactured by the same method as Example 1 above except that the kind and the amount of particles were changed as shown in Table 1 below.
According to Table 1 below, Example 3 used a mixture of particle A and particle B, and Example 6 used a mixture of particle C and particle D.
Physical properties of the obtained polyester films were measured and shown in Table 1 below.

[Comparative Example 1]

A polyester film of Comparative Example 1 was manufactured by the same method as Example 1 above except that silica particle E was used as shown in Table 1, rather than using particle A.
Physical properties of the obtained polyester film were measured and shown in Table 2 below.

[Comparative Example 2]

(Preparation of coating liquid B)

5 wt% of the coating liquid 1, 0.25 wt% of the coating liquid 2, and 0.1 wt% of the coating liquid 3 were mixed, and water was added to the mixture to have a total solid content of 2.63 wt%, thereby preparing a coating liquid B.
A film was manufactured by the same method as Example 1 above except that the coating liquid B was used.
Physical properties of the obtained polyester film were measured and shown in Table 2 below.

[Comparative Example 3]

(Preparation of coating liquid C)

20 wt% of the coating liquid 1, 0.4 wt% of the coating liquid 2, and 1 wt% of the coating liquid 3 were mixed, and water was added to the mixture to have a total solid content of 11.2 wt%, thereby preparing a coating liquid C.
A film was manufactured by the same method as Example 2 above except that the coating liquid C was used.
Physical properties of the obtained polyester film were measured and shown in Table 2 below.

[Comparative Example 4]

(Preparation of coating liquid D)

20 wt% of the coating liquid 1, 6 wt% of the coating liquid 2, and 1 wt% of the coating liquid 3 were mixed, and water was added to the mixture to have a total solid content of 14 wt%, thereby preparing a coating liquid D.
A film was manufactured by the same method as Example 3 above except that the coating liquid D was used.
Physical properties of the obtained polyester film were measured and shown in Table 2 below.

[Comparative Example 5]

A polyester film of Comparative Example 5 was manufactured by the same method as Example 1 above except that silica particle F was used as shown in Table 1, rather than using particle A.
Physical properties of the obtained polyester film were measured and shown in Table 2 below.

[Table 1]

| Classification | | | Example 1 | Example 2 | Example 3 | Example 4 | Example 5 | Example 6 |
|---|---|---|---|---|---|---|---|---|
| Base film | | Particle composition | A | B | A + B | C | D | C + D |
| | | Average particle diameter (μm) | 0.59 | 0.36 | 0.59+ 0.36 | 0.51 | 0.19 | 0.51+ 0.19 |
| | | Maximum particle diameter (μm) | 2.2 | 1.52 | 2.2 | 2.42 | 0.6 | 2.42 |
| | $P_a$ / $D_{max}$ | | 0.268 | 0.237 | 0.268 | 0.211 | 0.317 | 0.211 |
| | Particle amount (wt%) in film | | 0.15 | 0.15 | 0.05+ 0.1 | 0.16 | 0.039 | 0.1+0.05 |
| | Haze (%) | | 3.6 | 13.3 | 10.2 | 3.5 | 0.49 | 5.4 |
| | Surface roughness ($R_a$, μm) | | 0.018 | 0.011 | 0.013 | 0.021 | 0.005 | 0.018 |
| | Maximum peak height surface roughness ($R_p$, μm) | | 0.263 | 0.253 | 0.261 | 0.269 | 0.116 | 0.267 |
| Coating | Coating liquid (wt %) | 1 | 20 | 20 | 20 | 20 | 20 | 20 |
| | | 2 | 1.1 | 1.1 | 1.1 | 1.1 | 1.1 | 1.1 |
| | | 3 | 1 | 1 | 1 | 1 | 1 | 1 |
| | Uniformity in coating thickness | | Good | Good | Good | Good | Good | Good |
| | Coating thickness | | 0.2 | 0.2 | 0.2 | 0.2 | 0.2 | 0.2 |
| | Initial release force | | 6 | 5 | 6 | 6 | 5 | 5 |
| | Change according to time | Average release force | 25 | 26 | 24 | 25 | 26 | 25 |
| | | Release force deviation | 1 | 0.9 | 1.2 | 0.9 | 0.5 | 0.8 |
| | | Remaining adhesion rate | 92 | 92 | 92 | 92 | 92 | 92 |
| | | Coating appearance | Good | Good | Good | Good | Good | Good |

As shown in Table 1 above, it could be appreciated that the release film according to the present invention had low surface roughness and excellent initial release force and excellent change according to time of the release coating layer, and had 90% or more of remaining adhesion rate.

[Table 2]

| Classification | | | Comparative Example 1 | Comparative Example 2 | Comparative Example 3 | Comparative Example 4 | Comparative Example 5 |
|---|---|---|---|---|---|---|---|
| Base Film | | Particle composition | E | A | B | A + B | F |
| | | Average particle diameter (μm) | 0.34 | 0.59 | 0.36 | 0.59+ 0.36 | 0.13 |
| | | Maximum particle diameter (μm) | 3.5 | 2.2 | 1.52 | 2.2 | 1.5 |
| | | $P_a$ / $D_{max}$ | 0.097 | 0.268 | 0.237 | 0.268 | 0.0866 |
| | | Particle amount (wt%) in film | 0.1 | 0.15 | 0.15 | 0.05+ 0.1 | 0.15 |
| | Haze (%) | | 3.4 | 3.6 | 13.3 | 10.2 | 3.0 |
| | Surface roughness ($R_a$, μm) | | 0.019 | 0.018 | 0.011 | 0.013 | 0.015 |
| | Maximum peak height surface roughness ($R_p$, μm) | | 0.353 | 0.263 | 0.253 | 0.261 | 0.196 |
| Coatin g | Coating liquid (wt %) | 1 | 20 | 5 | 20 | 20 | 20 |
| | | 2 | 1.1 | 0.25 | 0.4 | 2 | 1.1 |
| | | 3 | 1 | 0.1 | 1 | 1 | 1 |
| | Uniformity in coating thickness | | Good | Defective | Good | Good | Roll is not wound. |
| | Coating thickness | | 0.2 | 0.05 | 0.2 | 0.2 | |
| | Initial release force | | 6 | 16 | 5 | 8 | |
| | Change accordi ng to time | Averag e releas e force | 25 | 48 | 14 | 56 | |
| | | Releas e force deviat ion | 4 | 2.5 | 2.7 | 5 | |
| | Remaining adhesion rate | | 92 | 85 | 80 | 98 | |
| | Coating appearance | | Good | Non-coated part occurs. | Good | Good | |

As shown in Table 2 above, it could be appreciated that even though Comparative Example 1 used the same release coating composition as Example 1, particles in the film were out of the scope of the present invention, such that release force deviation was significantly large.

It could be appreciated that in Comparative Example 2, as the coating thickness was decreased, uniformity of release force was deteriorated and the reaction conversion rate of the release coating layer was also decreased, such that the remaining adhesion rate was low, and it could be appreciated that the change according to time of the release coating layer was deteriorated.

It could be appreciated that in Comparative Example 3, as a ratio of the hydrogen silane-based compound was decreased, the unreacted silicone oil (Chemical Formula 1) remained, such that the remaining adhesion rate was low, and further, as the silicone-based wetting agent had a low amount, uncoated parts occurred, such that the initial release force and the change according to time of release force were high.

It could be appreciated that in Comparative Example 4, as a ratio of the hydrogen silane-based compound was increased, unreacted silane remained, such that the release force was high, and the change according to time of release force was also high.

It could be appreciated that even though Comparative Example 5 used the same release coating composition as Example 1, a ratio of the average particle diameter and the maximum particle diameter ($P_a/D_{max}$) of the particle in the film was 0.0866, such that the surface roughness was low, and accordingly, the film was not wound.

## Claims

1. A release film comprising:

a polyester base film including particles satisfying Equations 1 to 3 below, and
a release coating layer formed on one surface or both surfaces of the base film and having a release force variation satisfying Equation 4 below and a release force deviation satisfying Equation 5 below:

$$0.15 \leq P_a \leq 0.6 \quad \text{(Equation 1)}$$

$$0.6 \leq D_{max} \leq 2.5 \quad \text{(Equation 2)}$$

$$0.1 \leq P_a / D_{max} \leq 0.4 \quad \text{(Equation 3)}$$

(in Equations 1 to 3, $P_a$ is an average particle diameter (μm) of the particle, and $D_{max}$ is the maximum particle diameter (μm) of the particle),

$$|R_f - R_i| \leq 25 \quad \text{(Equation 4)}$$

(in Equation 4, $R_i$ is a release force measured after leaving the release film at 55°C for 24 hours, and $R_f$ is a release force measured after leaving the release film at 55°C for 240 hours), and

$$|R_{f\text{-}max} - R_{f\text{-}min}| \leq 2 \quad \text{(Equation 5)}$$

(in Equation 5, $R_{f\text{-}max}$ is the maximum value of five release force values each measured after leaving the release film at 55°C for 240 hours, and $R_{f\text{-}min}$ is the minimum value of five release force values each measured after leaving the release film at 55°C for 240 hours).

2. The release film of claim 1, wherein the release coating layer includes a compound represented by Chemical Formula 1 and a compound represented by Chemical Formula 2:

[Chemical Formula 1]

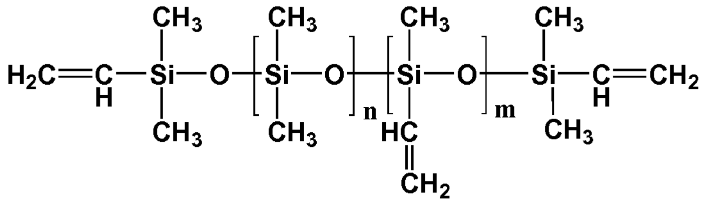

(in Chemical Formula 1, n is 20 to 3000, m is 1 to 500, and n+m is 21 to 3000), and

[Chemical Formula 2]

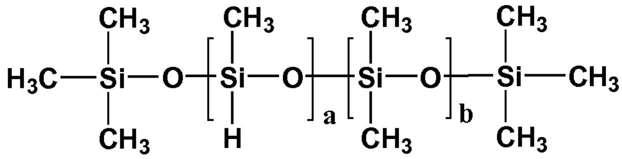

(in Chemical Formula 2, a is 1 to 150, b is 3 to 300, and a+b is 5 to 300).

**3.** The release film of claim 2, wherein the release coating is formed by coating a release coating composition including the compound represented by Chemical Formula 1, the compound represented by Chemical Formula 2, a platinum-based catalyst and a silicone-based wetting agent, and having a solid content of 10 to 30 wt% at a dry coating thickness of 0.07 to 0.3 μm.

**4.** The release film of claim 3, wherein the release coating composition includes the compound represented by Chemical Formula 1 having a solid content of 5 wt% to 25 wt%, the compound represented by Chemical Formula 2 having a solid content of 0.5 wt% to 5 wt%, the platinum-based catalyst having a solid content of 0.001 wt% to 3 wt%, and the silicone-based wetting agent having a solid content of 0.1 wt to 3 wt%.

**5.** The release film of claim 1, wherein the particles have an amount of 0.03 wt% to 0.25 wt% based on a total weight of the film.

**6.** The release film of claim 1, wherein the particle is selected at least one from an inorganic particle, an organic particle and a mixture of inorganic particle and organic particle.

**7.** The release film of claim 6, wherein the inorganic particle is selected from calcium carbonate, titanium oxide, silica, kaolin and barium sulfate, and the organic particle is selected from silicone resins, crosslinked divinylbenzene polymethacrylates, crosslinked polymethacrylates, crosslinked polystyrene resins, benzoguanamine-formaldehyde resins, benzoguanamine-melamine-formaldehyde resins and melamine-formaldehyde resins.

**8.** The release film of claim 1, wherein the polyester base film has a maximum peak height surface roughness ($R_p$) of 0.1 μm to 0.27 μm.

**9.** The release film of claim 1, wherein the polyester base film has a haze of 1.5% to 10%.

**10.** The release film of claim 1, wherein the polyester base film has a thickness of 10 μm to 50 μm.

**11.** The release film of claim 1, wherein the release film has a remaining adhesion rate of 90% or more, calculated according to Equation 6 below after an adhesive tape attached with the release film is maintained at 70°C for 24 hours, the adhesive tape is removed, and the release film is laminated with a Teflon sheet:

(Equation 6)

Remaining adhesion rate = adhesion force of adhesive tape after aging at 70℃ for 24 hours / adhesion force of initiative adhesive tape × 100.

**12.** The release film of claim 1, wherein the release coating layer is formed by an in-line coating method.

**13.** A method for manufacturing a release film comprising:

a) melt-extruding a polyester resin including particles satisfying Equations 1 to 3 below to be manufactured into a sheet:

$$0.15 \leq P_a \leq 0.6 \quad \text{(Equation 1)}$$

$$0.6 \leq D_{max} \leq 2.5 \quad \text{(Equation 2)}$$

$$0.1 \leq Pa / D_{max} \leq 0.4 \quad \text{(Equation 3)}$$

(in Equations 1 to 3, $P_a$ is an average particle diameter (μm) of the particle, and $D_{max}$ is the maximum particle diameter (μm) of the particle),
b) stretching the sheet three (3) to five (5) times at 80°C to 150°C in a longitudinal direction;
c) applying a release coating composition including a compound represented by Chemical Formula 1 below and a compound represented by Chemical Formula 2 below, on one surface or both surfaces of the uniaxially stretched polyester base film in the longitudinal direction, by an in-line coating method;
d) drying and pre-heating the film onto which the release coating composition is applied at 130°C to 150°C, and stretching the film three (3) to four (4) times in a transverse direction, to manufacture the release film in which a release coating layer is formed; and
e) performing a heat treatment,

[Chemical Formula 1]

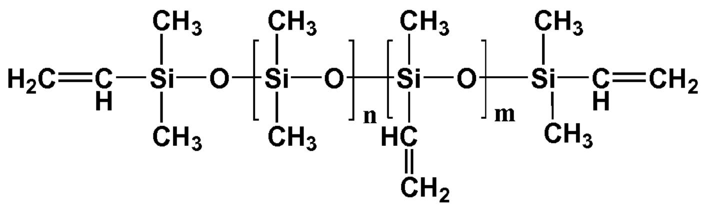

(in Chemical Formula 1, n is 20 to 3000, m is1 to 500, and n+m is 21 to 3000), and

[Chemical Formula 2]

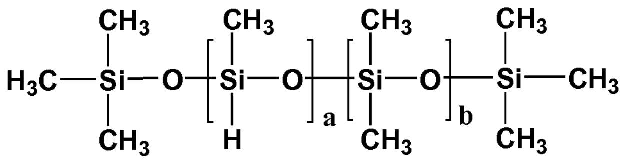

(in Chemical Formula 2, a is 1 to 150, b is 3 to 300, and a+b is 5 to 300).

**14.** The method of claim 13, wherein in step c), the release coating composition is applied by using a gravure roll.

**15.** The method of claim 13, wherein the polyester base film of the release film has a thickness of 10 μm to 50 μm, and the release coating layer of the release film has a thickness of 0.07 μm to 0.3 μm.

**16.** The method of claim 13, wherein in step e), the heat treatment is performed at 230°C to 250°C.

FIG. 1

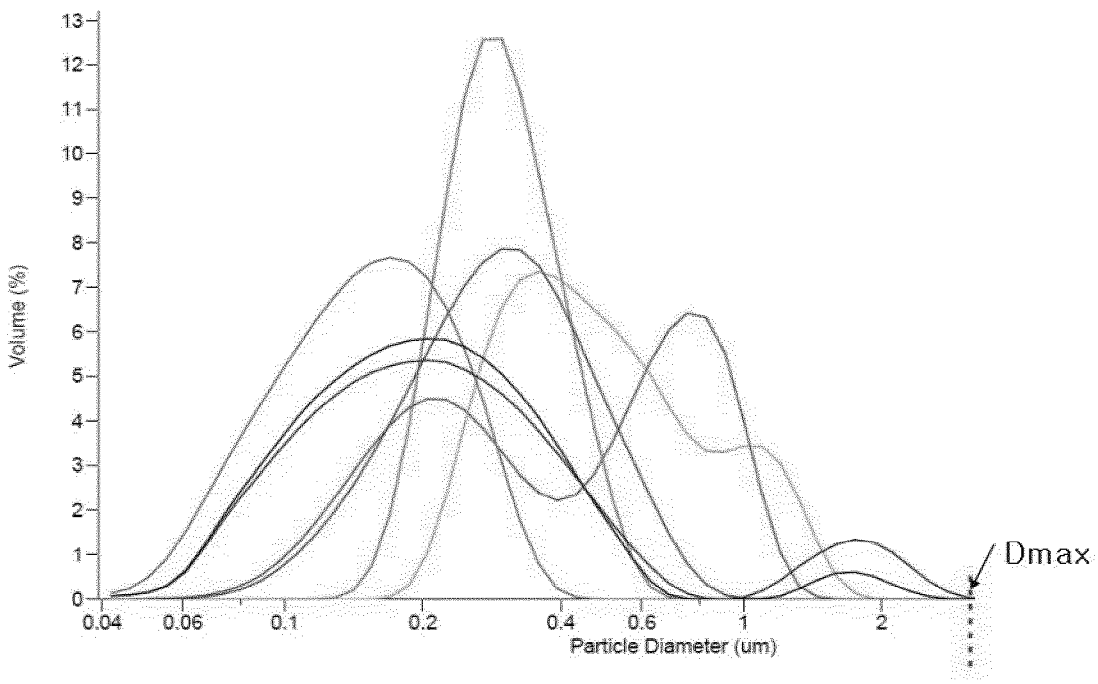
Volume (%)
Particle Diameter (um)
Dmax
13
12
11
10
9
8
7
6
5
4
3
2
1
0
0.04
0.06
0.1
0.2
0.4
0.6
1
2

# INTERNATIONAL SEARCH REPORT

International application No.
**PCT/KR2014/009170**

A. CLASSIFICATION OF SUBJECT MATTER

***C09D 5/20(2006.01)i, C09J 7/02(2006.01)i***

According to International Patent Classification (IPC) or to both national classification and IPC

B. FIELDS SEARCHED

Minimum documentation searched (classification system followed by classification symbols)

C09D 5/20; B32B 7/02; G02F 1/13363; B29C 55/10; G02B 5/30; C08J 5/18; C08G 63/88; G02B 5/02; B32B 27/36; B32B 27/00; C09J 7/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: polyester, particle, deformation, silicon

C. DOCUMENTS CONSIDERED TO BE RELEVANT

| Category* | Citation of document, with indication, where appropriate, of the relevant passages | Relevant to claim No. |
|---|---|---|
| A | KR 10-2008-0084347 A (TORAY SAEHAN INC.) 19 September 2008<br>See abstract; claims 1-6; paragraphs [48], [51]-[69], [74]-[79], [98]-[106]. | 1-16 |
| A | WO 03-099556 A1 (TEIJIN DUPONT FILMS JAPAN LIMITED) 04 December 2003<br>See claims 1-16; page 7 line 26 - page 10 line 3; page 17 line 26 - page 19 line 1. | 1-16 |
| A | KR 10-2009-0020423 A (TORAY SAEHAN INC.) 26 February 2009<br>See abstract; claim 1; paragraphs [24]-[28], [53]-[67]; table 1. | 1-16 |
| A | KR 10-2011-0009400 A (TORAY ADVANCED MATERIALS KOREA INC.) 28 January 2011<br>See claims 1, 3; paragraphs [22], [27], [28]. | 1-16 |
| A | KR 10-0477858 B1 (TORAY SAEHAN INC.) 11 July 2005<br>See claims 1, 2; page 4 lines 14-20. | 1-16 |
| A | KR 10-2011-0054990 A (TORAY ADVANCED MATERIALS KOREA INC.) 25 May 2011<br>See claims 1, 4; paragraphs [36], [37]. | 1-16 |
| A | KR 10-2010-0036813 A (KOLON INDUSTRIES, INC.) 08 April 2010<br>See abstract; claims 1-3, 5; paragraphs [23], [24], [41]-[46]. | 1-16 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 DECEMBER 2014 (19.12.2014) | **22 DECEMBER 2014 (22.12.2014)** |

| Name and mailing address of the ISA/**KR** | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.
PCT/KR2014/009170

| Patent document cited in search report | Publication date | Patent family member | Publication date |
|---|---|---|---|
| KR 10-2008-0084347 A | 19/09/2008 | NONE | |
| WO 03-099556 A1 | 04/12/2003 | AU 2003-242434 A1 | 12/12/2003 |
| | | CN 100379553 C0 | 09/04/2008 |
| | | CN 1655927 A | 17/08/2005 |
| | | CN 1655927 C0 | 09/04/2008 |
| | | JP 03950462 B2 | 01/08/2007 |
| | | KR 10-0919440 B1 | 29/09/2009 |
| | | KR 10-2004-0111342 A | 31/12/2004 |
| | | TW I319750 A | 21/01/2010 |
| | | TW I319750 B | 21/01/2010 |
| KR 10-2009-0020423 A | 26/02/2009 | NONE | |
| KR 10-2011-0009400 A | 28/01/2011 | NONE | |
| KR 10-0477858 B1 | 11/07/2005 | NONE | |
| KR 10-2011-0054990 A | 25/05/2011 | CN 102070878 A | 25/05/2011 |
| | | CN 102070878 B | 25/12/2013 |
| | | JP 05177769 B2 | 10/04/2013 |
| | | JP 2011-104981 A | 02/06/2011 |
| | | TW I426099 B | 11/02/2014 |
| KR 10-2010-0036813 A | 08/04/2010 | NONE | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 20030055118
- KR 19990088139